# EUROPEAN PATENT APPLICATION

(11) **EP 3 103 981 A1**
(43) Date of publication of application: **14.12.2016**
(21) Application number: 16173364.7
(22) Date of filing: 07.06.2016
(51) Int. Cl.: F01P 3/20

(54) **HEAT EXCHANGE APPARATUS OF VEHICLE**

(30) Priority: 09.06.2015 JP 2015116693
(71) Applicant: Toyota Jidosha Kabushiki Kaisha, Toyota-shi, Aichi-ken, 471-8571 (JP)
(72) Inventor: KAWAMOTO, Naoya, TOYOTA-SHI, AICHI-KEN, 471-8571 (JP)
(74) Representative: Intès, Didier Gérard André

(57) **Abstract**

A heat exchange apparatus (1) of a vehicle includes a coolant circuit (40, 43), to which a water pump (45), an EGR cooler (17) in which exhaust gas flowing through an EGR passage (13) and a coolant exchange heat, an oil cooler (25) in which engine oil and the coolant exchange heat, and an ATF warmer (35) in which an automatic transmission fluid as a hydraulic fluid of an automatic transmission (30) and the coolant exchange heat are connected, between a water jacket exit (22) and a water jacket entry (21) of an internal combustion engine (10). In the coolant circuit (40, 43), the oil cooler (25) and the ATF warmer (35) are connected to a downstream side of the EGR cooler (17).

## Description

### BACKGROUND

### 1. Technical Field

The present disclosure relates to a heat exchange apparatus of a vehicle.

### 2. Description of Related Art

In Japanese patent application publication No. 2014-196708 (JP 2014-196708 A), a heat exchange apparatus of a vehicle that includes a coolant circuit in which an oil cooler and an air-conditioning heater are connected in parallel between an exit of a water jacket of an internal combustion engine and an entry of the water jacket is disclosed.

### SUMMARY

In heat exchangers connected in parallel between the exit of the water jacket of the internal combustion engine and the entry of the water jacket as in the coolant circuit, for example, an EGR (exhaust gas recirculation) cooler, an oil cooler, and an ATF (automatic transmission fluid) warmer might be connected in parallel between the exit of the water jacket of the internal combustion engine and the entry of the water jacket. In such a case, a coolant that flows out of the exit of the water jacket of the internal combustion engine is branched and flows into the EGR cooler, the oil cooler, and the ATF warmer.

The coolant and engine oil exchange heat in the oil cooler, and the coolant and an ATF as a hydraulic fluid of an automatic transmission exchange heat in the ATF warmer. Heat capacities of the oil cooler and the engine oil are larger than a heat capacity of the EGR cooler. In addition, heat capacities of the ATF warmer and the ATF are larger than the heat capacity of the EGR cooler. Thus, during a cold start of the internal combustion engine, the EGR cooler is promptly warmed by the coolant. Meanwhile, there is a case where long time is required to warm the automatic transmission through heating of the ATF in the ATF warmer and to warm each component to which the engine oil is supplied through heating of the engine oil in the oil cooler.

While warming of the EGR cooler is uncompleted, exhaust gas is not recirculated to an intake passage side through an EGR passage so as to inhibit generation of condensed water in the EGR passage. Once warming of the EGR cooler is completed, the exhaust gas is recirculated to the intake passage side through the EGR passage. As a result, the coolant receives heat from the exhaust gas, and the coolant reaches a high temperature in the EGR cooler.

However, in the above configuration, the high-temperature coolant that has received the heat from the exhaust gas does not pass through the oil cooler or the ATF warmer but is introduced to the entry of the water jacket of the internal combustion engine. Thus, heat of the coolant that has passed through the EGR cooler cannot be used for warming by the oil cooler and the ATF warmer. In particular, in the case where the coolant that has passed through the EGR cooler passes through a radiator, the heat received by the coolant in the EGR cooler through the heat exchange between the coolant and the exhaust gas is not used for warming by the oil cooler or warming by the ATF warmer but is radiated.

The disclosure provides a heat exchange apparatus of a vehicle that can reduce time required for warming by an oil cooler and an ATF warmer by effectively using heat received by a coolant from exhaust gas in an EGR cooler.

A first aspect of the invention provides a heat exchange apparatus for a vehicle. The vehicle includes an internal combustion engine and an automatic transmission, the internal combustion engine has a water jacket, an intake passage, an exhaust passage, and an EGR passage, the EGR passage connecting the intake passage and the exhaust passage, and the EGR passage is configured to recirculate exhaust gas from the exhaust passage to the intake passage. The heat exchange apparatus includes an EGR cooler, an oil cooler, an ATF warmer, a water pump and a coolant circuit.
The EGR cooler is configured to make the exhaust gas flowing through the EGR passage and a coolant exchanging heat. The oil cooler is configured to make engine oil and the coolant exchanging heat. The ATF warmer is configured to make an automatic transmission fluid and the coolant exchanging heat, the automatic transmission fluid is a hydraulic fluid of the automatic transmission. The coolant circuit is provided between an exit of the water jacket of the internal combustion engine and an entry of the water jacket. The coolant circuit is connected to the water pump, the EGR cooler, the oil cooler, and the ATF warmer. The oil cooler and the ATF warmer are connected to a downstream side of the EGR cooler in the coolant circuit.

According to the above configuration, the coolant that has flowed through the EGR cooler flows through the oil cooler and the ATF warmer. Thus, the heat that the coolant has received from the exhaust gas in the EGR cooler can be used for warming by the oil cooler and warming by the ATF warmer after warming of the EGR cooler is completed. Therefore, time required for warming by the oil cooler and warming by the ATF warmer can be reduced.

In the heat exchange apparatus, the oil cooler may be connected in parallel with the ATF warmer in the coolant circuit. The heat exchange apparatus may further includes a valve heat exchange section configured to exchange heat between an EGR valve and the coolant, the EGR valve may be disposed in the EGR passage, the EGR valve may be configured to adjust a recirculation amount of the exhaust gas. The valve heat exchange section may be connected in parallel with the EGR cooler in the coolant circuit.

According to the above configuration, the EGR valve can be warmed by the coolant that has flowed out of the water jacket exit and flows through the valve heat exchange section during a cold start. Thus, generation of condensed water at a time when the exhaust gas passes through the EGR valve can be inhibited. In addition, after warming of the EGR valve, the exhaust gas that passes through the EGR valve can be cooled by the coolant.

Because the EGR valve has a smaller heat capacity than the oil cooler, the engine oil, the ATF warmer, and the ATF, the EGR valve is promptly warmed before completion of warming by the oil cooler and the ATF warmer. Thus, the heat that the coolant has received from the exhaust gas in the valve heat exchange section can be used for warming by the oil cooler and warming by the ATF warmer. Therefore, the time required to complete warming by the oil cooler and the ATF warmer can further be reduced.

The heat exchange apparatus may further includes a detecting section configured to detect a temperature of the coolant that has flowed out of the water jacket; and an electronic control unit. The electronic control unit may be configured to close an EGR valve when the temperature of the coolant detected by the detecting section becomes equal to or higher than a predetermined temperature, the EGR valve may be disposed in the EGR passage, the EGR valve may be configured to adjust a recirculation amount of the exhaust gas. The predetermined temperature may be higher than the temperature of the coolant detected by the detecting section when warming by the ATF warmer and the oil cooler is completed and the automatic transmission fluid and the engine oil are cooled by the coolant.

After the completion of the warming by the ATF warmer and the oil cooler, the ATF and the engine oil are cooled through heat exchange with the coolant that passes through the ATF warmer and the oil cooler. Accordingly, in the case where the coolant at an extremely high temperature flows into the ATF warmer and the oil cooler after the completion of warming, neither the ATF nor the engine oil can be cooled.

According to the above configuration, in the case where the temperature of the coolant that has flowed out of the water jacket exit becomes equal to or higher than the predetermined temperature, the EGR valve is closed, and a flow of the exhaust gas in the EGR passage is stopped. Thus, a further increase of the temperature of the coolant, which is caused by provision of heat of the exhaust gas that is newly discharged from the internal combustion engine to the coolant at the predetermined temperature or higher that has flowed out of the water jacket exit, can be inhibited. In this way, inflow of the high-temperature coolant to the oil cooler and the ATF warmer after the completion of warming by the oil cooler and the ATF warmer is inhibited. Therefore, incapability of the coolant to appropriately cool the ATF and the engine oil can be inhibited.
The invention further relates to a vehicle comprising a heat exchange apparatus according to the invention.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view that shows a heat exchange apparatus of a vehicle of a first embodiment and peripheral mechanisms thereof;
FIG. 2 is a flowchart that shows an execution procedure of EGR cut control in the embodiment;
FIG. 3 is a timing chart that shows a temperature transition of each section of a coolant circuit in a comparative example;
FIG. 4 is a timing chart that shows a temperature transition of each section of a coolant circuit in the embodiment; and
FIG. 5 is a schematic view that shows a heat exchange apparatus of a vehicle of a second embodiment and peripheral mechanisms thereof.

### DETAILED DESCRIPTION OF EMBODIMENTS

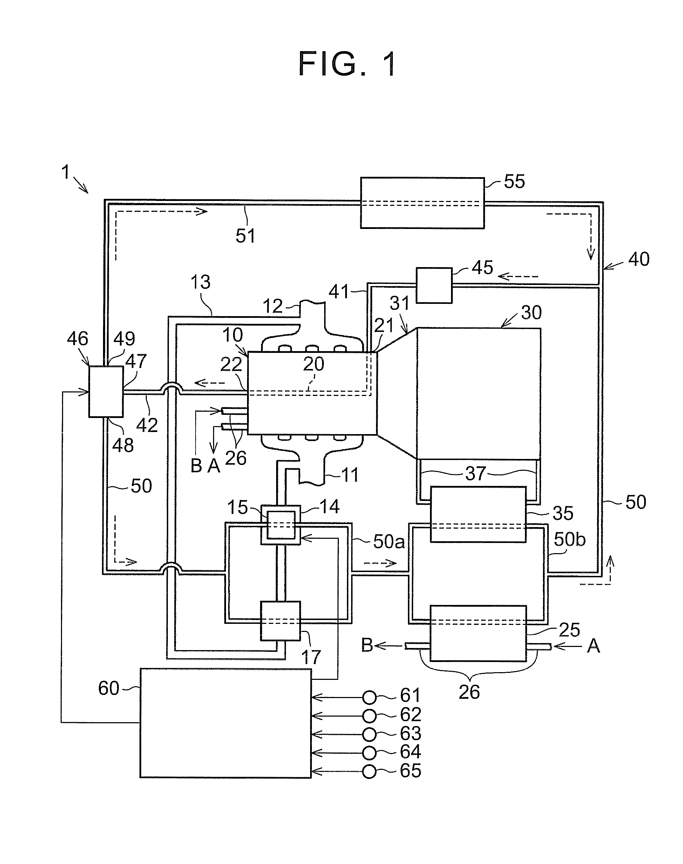

A description will hereinafter be made on a first embodiment in which a heat exchange apparatus of a vehicle is embodied with reference to FIG. 1 to FIG. 4. An internal combustion engine 10 and an automatic transmission 30 are mounted in the vehicle of this embodiment.

The internal combustion engine 10 of this embodiment is a gasoline engine. The internal combustion engine 10 includes an intake passage 11 and an exhaust passage 12. The intake passage 11 is configured to feed air into a combustion chamber. The exhaust passage 12 is configured to discharge combustion gas combusted in the combustion chamber as exhaust gas. An EGR passage 13 for recirculating the exhaust gas that flows through the exhaust passage 12 to the intake passage 11 is connected to the intake passage 11 and the exhaust passage 12. The EGR passage 13 is provided with an EGR valve 14 for adjusting a recirculation amount of the exhaust gas. In this embodiment, a valve heat exchange section 15 for heat exchange between the EGR valve 14 and a coolant is provided in an integrated manner with the EGR valve 14. In the EGR passage 13, an EGR cooler 17 is provided on an upstream side of the EGR valve 14. The EGR cooler 17 is configured that the exhaust gas flowing through the EGR passage 13 and the coolant exchange heat.

A water jacket 20 is formed in a cylinder block and a cylinder head of the internal combustion engine 10. The vehicle is provided with an oil cooler 25 in which the coolant and engine oil used as a lubricant and a hydraulic fluid for each portion of the internal combustion engine 10 exchange heat. An oil passage 26 through which the engine oil flows is connected to the oil cooler 25, and the engine oil is returned to each of the lubricated portions and the like of the internal combustion engine 10 after being introduced into the oil cooler 25 through the oil passage 26 and exchanging the heat with the coolant.

The automatic transmission 30 is connected to the internal combustion engine 10 via a torque converter 31. A hydraulic fluid for actuating the automatic transmission 30, that is, an automatic transmission fluid is accommodated in the automatic transmission 30. The vehicle is provided with an ATF warmer 35 in which this ATF and the coolant exchange heat. An ATF passage 37 through which the ATF in the automatic transmission 30 flows is connected to the ATF warmer 35, and the ATF is returned to the automatic transmission 30 through the ATF passage 37 after being introduced into the ATF warmer 35 through the ATF passage 37 and exchanging the heat with the coolant.

A heat exchange apparatus 1 of the vehicle includes a coolant circuit 40 through which the coolant circulates. A downstream end of an entry-side passage 41 of the coolant circuit 40 is connected to a water jacket entry 21 as an entry of the above water jacket 20. A water pump 45 is connected to a middle point of the entry-side passage 41. This water pump 45 is driven in conjunction with rotation of a crankshaft as an output shaft of the internal combustion engine 10. In addition, a water jacket exit 22 as an exit of the water jacket 20 is connected to an inflow port 47 of a control valve 46 via an exit-side passage 42 of the coolant circuit 40.

The control valve 46 includes the above inflow port 47, a first outflow port 48, and a second outflow port 49. Each of these ports 47, 48, 49 communicates with an internal space of the control valve 46. The control valve 46 is configured to be able to adjust communicated/blocked states between the inflow port 47 and the first outflow port 48 and communicated/blocked states between the inflow port 47 and the second outflow port 49 by controlling a valve body that is accommodated in the internal space.

An upstream end of a first heat exchange passage 50 is connected to the first outflow port 48 of the control valve 46. An upstream end of a second heat exchange passage 51 is connected to the second outflow port 49 of the control valve 46. A downstream end of the first heat exchange passage 50 and a downstream end of the second heat exchange passage 51 are merged and connected to an upstream end of the entry-side passage 41.

In the above first heat exchange passage 50, a first parallel passage 50a in which the EGR cooler 17 and the valve heat exchange section 15 are connected in parallel and a second parallel passage 50b in which the oil cooler 25 and the ATF warmer 35 are connected in parallel are sequentially connected from an upstream side. That is, the oil cooler 25 and the ATF warmer 35 are connected to a downstream side of the EGR cooler 17 in the first heat exchange passage 50.

A radiator 55 is connected to a middle point of the above second heat exchange passage 51. The heat exchange apparatus 1 of the vehicle includes an electronic control unit 60 for executing control of a flowing condition and a temperature of the coolant in the coolant circuit 40. The electronic control unit 60 is configured by including a microcomputer that includes: a central processing unit (CPU); a read-only memory (ROM) that stores various programs, maps, and the like in advance; a random access memory (RAM) that temporarily stores computation results and the like of the CPU; an input interface; an output interface; and the like, as a central component.

The electronic control unit 60 adjusts the temperature and the flowing condition of the coolant that flows through the coolant circuit 40 by receiving signals of various sensors provided in the vehicle. As the above various sensors, an airflow meter 61, a speed sensor 62, an accelerator sensor 63, a vehicle speed sensor 64, and a coolant temperature sensor 65 are raised. The airflow meter 61 detects an intake air amount GA. The speed sensor 62 detects an engine speed NE as a rotational speed of the crankshaft. The accelerator sensor 63 detects an accelerator operation amount as a depressed amount of an accelerator pedal. The vehicle speed sensor 64 detects a vehicle speed. The coolant temperature sensor 65 outputs a detection signal that corresponds to the temperature of the coolant that flows out of the water jacket exit 22 and flows through the exit-side passage 42. The coolant temperature sensor 65 is one example of a detecting section that detects the temperature of the coolant that flows out of the water jacket exit 22. In the following description, the temperature of the coolant at the water jacket exit 22 is referred to as an exit coolant temperature.

The electronic control unit 60 adjusts the temperature and the flowing condition of the coolant that flows through the coolant circuit 40 by controlling the control valve 46 and the EGR valve 14 on the basis of the detection signals of these various sensors.

In detail, as control of the control valve 46, the electronic control unit 60 controls the control valve 46 such that the inflow port 47 and the first outflow port 48 constantly communicate with each other during an operation of the internal combustion engine 10. In this way, at least some of the coolant that has flowed out of the water jacket exit 22 constantly flows into the first heat exchange passage 50 during the operation of the internal combustion engine 10.

In addition, the electronic control unit 60 adjusts the communicated state between the inflow port 47 and the second outflow port 49 such that the exit coolant temperature indicated by the detection signal of the coolant temperature sensor 65 becomes a target temperature that is set on the basis of an engine operation state. In detail, the electronic control unit 60 gains the engine speed NE on the basis of the detection signal of the speed sensor 62 and also gains a load of the internal combustion engine 10 on the basis of the detection signals of the airflow meter 61, the accelerator sensor 63, and the like. Then, because the electronic control unit 60 stores a map indicative of relationships of the target temperature with the engine speed NE and the load in advance, the electronic control unit 60 sets the target temperature by applying the gained engine speed NE and load to this map. Noted that, regarding the load of the internal combustion engine 10, the target temperature is set to be a lower temperature to cool the internal combustion engine 10 as the load is increased in this map. On the other hand, as the load of the internal combustion engine 10 is reduced, the target temperature is set to be a higher temperature to increase a heat retaining property of the internal combustion engine 10. In addition, regarding the engine speed NE, the target temperature is set to be a lower temperature to inhibit occurrence of knocking as the engine speed NE is increased. A lower limit value of the target temperature that is set just as described is set to be a temperature at a time when warming of the internal combustion engine 10 is completed.

The electronic control unit 60 blocks communication between the inflow port 47 and the second outflow port 49 when the exit coolant temperature is lower than the target temperature. That is, there is no need to radiate the heat of the coolant by the radiator when the exit coolant temperature is lower than the target temperature. Thus, the electronic control unit 60 controls such that the coolant does not flow into the second heat exchange passage 51 from the second outflow port 49. On the other hand, when the exit coolant temperature is higher than the target temperature, the electronic control unit 60 controls the valve body of the control valve 46 and makes the inflow port 47 and the second outflow port 49 communicate with each other in order to let the coolant that has flowed out of the water jacket exit 22 flow into the radiator 55 and let the heat of the coolant be radiated thereby. In addition, as the exit coolant temperature becomes higher than the target temperature, the electronic control unit 60 controls the valve body such that a passage cross section between the inflow port 47 and the second outflow port 49 in the communicated states is increased, and thereby increases a flow rate of the coolant flowing through the radiator 55 among the coolant that has flowed out of the water jacket exit 22.

The electronic control unit 60 completely closes the EGR valve 14 in a state where the exit coolant temperature is lower than a reference temperature. This reference temperature is a lower temperature than the above target temperature and is set to be a temperature at which condensation of water vapor contained in the exhaust gas can be inhibited by making the coolant at the reference temperature or higher flow through the EGR cooler 17 and the valve heat exchange section 15 even when the exhaust gas flows through the EGR cooler 17 and the EGR valve 14 and is cooled by the coolant. That is, in the state where the exit coolant temperature is lower than the reference temperature, the exhaust gas flows through the EGR cooler 17 and the EGR valve 14 and is cooled by the coolant, and the water vapor contained in the exhaust gas is possibly condensed. For this reason, the EGR valve 14 is completely closed. Once the exit coolant temperature becomes equal to or higher than the above reference temperature, the electronic control unit 60 opens the EGR valve 14 in accordance with the engine operation state, the exit coolant temperature, and the like that are gained by the signals of the above various sensors and the like, and adjusts an opening amount thereof.

Due to such control, as will be described below, the coolant circulates through the coolant circuit 40, and the temperature of the coolant is changed. Noted that broken arrows along the coolant circuit 40 in FIG. 1 each indicate a direction that the coolant flows in a situation where circulation of the coolant is permitted in each of the coolant passages 41, 42, 50, 51.

During a cold start of the internal combustion engine 10, the exit coolant temperature is lower than the above reference temperature and is lower than the above target temperature. Thus, while the inflow port 47 and the first outflow port 48 communicate with each other in the control valve 46 during the cold start of the internal combustion engine 10, the communication between the inflow port 47 and the second outflow port 49 is blocked. Accordingly, the coolant that has flowed through the water jacket 20 of the internal combustion engine 10 and has flowed out of the water jacket exit 22 flows into the first heat exchange passage 50 but does not flow into the second heat exchange passage 51. Thus, the coolant that has flowed out of the water jacket 20 is branched, flows through the valve heat exchange section 15 and the EGR cooler 17, is merged, is branched again, and flows through the oil cooler 25 and the ATF warmer 35. Thereafter, the coolants that have flowed out of the oil cooler 25 and the ATF warmer 35 are merged, are suctioned by the water pump 45, and flow into the water jacket 20 of the internal combustion engine 10.

Then, when a temperature of the internal combustion engine 10 is gradually increased by the continuous operation of the internal combustion engine 10, the exit coolant temperature is gradually increased. Once the exit coolant temperature reaches the reference temperature, the coolant at this reference temperature or higher is branched and flows through the valve heat exchange section 15 and the EGR cooler 17. Due to small heat capacities of the EGR valve 14 and the EGR cooler 17, warming thereof is promptly completed when the coolant at the reference temperature or higher flows thereinto. Then, when the exit coolant temperature becomes equal to or higher than the reference temperature, and thus the EGR valve 14 is opened by the control of the electronic control unit 60, the exhaust gas flows through the EGR passage 13. In this way, the coolant receives the heat from the exhaust gas when flowing through the EGR cooler 17 and reaches a high temperature. The coolant also receives the heat from the exhaust gas when flowing through the valve heat exchange section 15 and reaches the high temperature. Accordingly, in the first heat exchange passage 50, the high-temperature coolant that has been merged after flowing through the EGR cooler 17 and the valve heat exchange section 15 is branched again and flows through the oil cooler 25 and the ATF warmer 35. Just as described, the oil cooler 25 and the ATF warmer 35 are connected to the downstream side of the EGR cooler 17 and the valve heat exchange section 15 in the coolant circuit 40 of this embodiment. Accordingly, after warming of the EGR cooler 17 and the EGR valve 14 is completed, the heat received by the coolant from the exhaust gas in the EGR cooler 17 and the valve heat exchange section 15 is used for warming by the oil cooler 25 and warming by the ATF warmer 35. Thus, time required for warming by the oil cooler 25 and the ATF warmer 35 is reduced. Then, the coolant that has flowed through the oil cooler 25 and the coolant that has flowed through the ATF warmer 35 are merged, suctioned by the water pump 45, and flow into the water jacket 20 of the internal combustion engine 10.

Thereafter, when warming of the internal combustion engine 10 is completed, and the exit coolant temperature becomes equal to or higher than the target temperature that corresponds to the operation state of the internal combustion engine 10, the inflow port 47 and the second outflow port 49 of the control valve 46 are brought into the communicated state. In this way, some of the coolant that has flowed out of the water jacket exit 22 flows through the second heat exchange passage 51, and the heat of the coolant is radiated at a time when the coolant flows through the radiator 55. The rest of the coolant that has flowed out of the water jacket exit 22 flows through the first heat exchange passage 50 as described above. In addition, after warming by the EGR cooler 17, the EGR valve 14, the oil cooler 25, and the ATF warmer 35 is completed, the exhaust gas flowing through the EGR cooler 17 and the EGR valve 14 is cooled by the coolant, the engine oil is cooled by the coolant in the oil cooler 25, and the ATF is cooled by the coolant in the ATF warmer 35. Then, the coolant that has flowed through the first heat exchange passage 50 and the coolant that has flowed through the second heat exchange passage 51 are merged, are suctioned by the water pump 45, and flow into the water jacket 20.

Noted that, as described above, the ATF and the engine oil are cooled through heat exchange with the coolant flowing through the ATF warmer 35 and the oil cooler 25 after warming by the ATF warmer 35 and the oil cooler 25 is completed. Accordingly, in the case where the coolant at an extremely high temperature flows into the ATF warmer 35 and the oil cooler 25 after warming by the ATF warmer 35 and the oil cooler 25 is completed, neither the ATF nor the engine oil can appropriately be cooled.

Thus, in this embodiment, in the case where the exit coolant temperature becomes equal to or higher than a predetermined temperature that is indicated by the detection signal of the coolant temperature sensor 65 at a time when warming by the ATF warmer 35 and the oil cooler 25 is completed and the ATF and the engine oil are cooled by the coolant, the electronic control unit 60 cuts off the EGR by closing the EGR valve 14. Noted that this predetermined temperature is a higher temperature than the lower limit value of the above target temperature and is set by deriving the exit coolant temperature at the time when warming by the ATF warmer 35 and the oil cooler 25 is completed and the ATF and the engine oil are cooled by the coolant from an experiment or a simulation in advance.

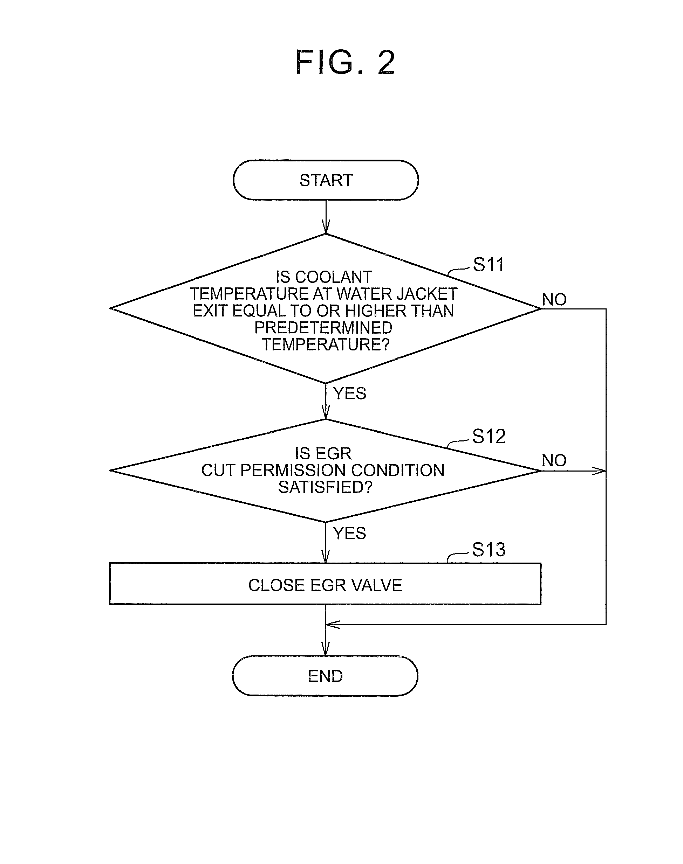

EGR cut control by the electronic control unit 60 is executed in accordance with a processing procedure shown in a flowchart in FIG. 2. The processing shown in FIG. 2 is repeatedly executed at specified intervals during the operation of the internal combustion engine 10.

As shown in FIG. 2, when the EGR cut control is started, it is determined in step S 11 whether the exit coolant temperature is equal to or higher than the predetermined temperature. If the exit coolant temperature is equal to or higher than the predetermined temperature (step S11: YES), the processing proceeds to step S 12, and it is determined whether an EGR cut permission condition is established. As the EGR cut permission condition, a condition of the operation state in a situation where an output request of the internal combustion engine 10 is high, such as a case where a further acceleration request is made during a high-speed travel, is raised. That is, no serious problem occurs to fuel economy in such an operation state even when the EGR is cut off. Thus, cutting of the EGR is permitted. For example, in the case where the vehicle speed indicated by the detection signal of the vehicle speed sensor 64 is equal to or higher than a specified speed, the accelerator operation amount is equal to or higher than a specified amount, and the like, the electronic control unit 60 determines that the output request of the internal combustion engine 10 is high and that the EGR cut permission condition is established. Then, if it is determined in step S12 that the EGR cut permission condition is established (step S12: YES), the processing proceeds to step S 13, the EGR valve 14 is closed and brought into a completely closed state, and this processing is terminated once.

As described above, the EGR valve 14 is brought into the completely closed state in the case where the exit coolant temperature becomes equal to or higher than the predetermined temperature and the EGR cut permission condition is established. Thus, inflow of the high-temperature coolant to the ATF warmer 35 and the oil cooler 25, which is caused by provision of the heat of the exhaust gas that is newly discharged from the internal combustion engine 10 to the coolant at the predetermined temperature or higher that has flowed out of the water jacket exit 22 in the EGR cooler 17, is inhibited.

On the other hand, if it is determined in step S 11 that the exit coolant temperature is lower than the predetermined temperature (step S11: NO), this processing is terminated once. That is, in such a case, the opening amount of the EGR valve 14 is controlled by different processing from the processing shown in FIG. 2. More specifically, when the exit coolant temperature is lower than the reference temperature, the electronic control unit 60 controls the EGR valve 14 to be in the completely closed state as described above. In addition, when the exit coolant temperature is equal to or higher than the above reference temperature and is lower than the above predetermined temperature, the electronic control unit 60 controls the EGR valve 14 such that the opening amount thereof is adjusted in accordance with the operation state of the internal combustion engine 10.

Furthermore, if it is determined in step S12 that the EGR cut permission condition is not established (step S12: NO), this processing is terminated once. That is, in such a case, the electronic control unit 60 controls the EGR valve 14 by the different processing from the processing shown in FIG. 2 such that the opening amount thereof is adjusted in accordance with the operation state of the internal combustion engine 10.

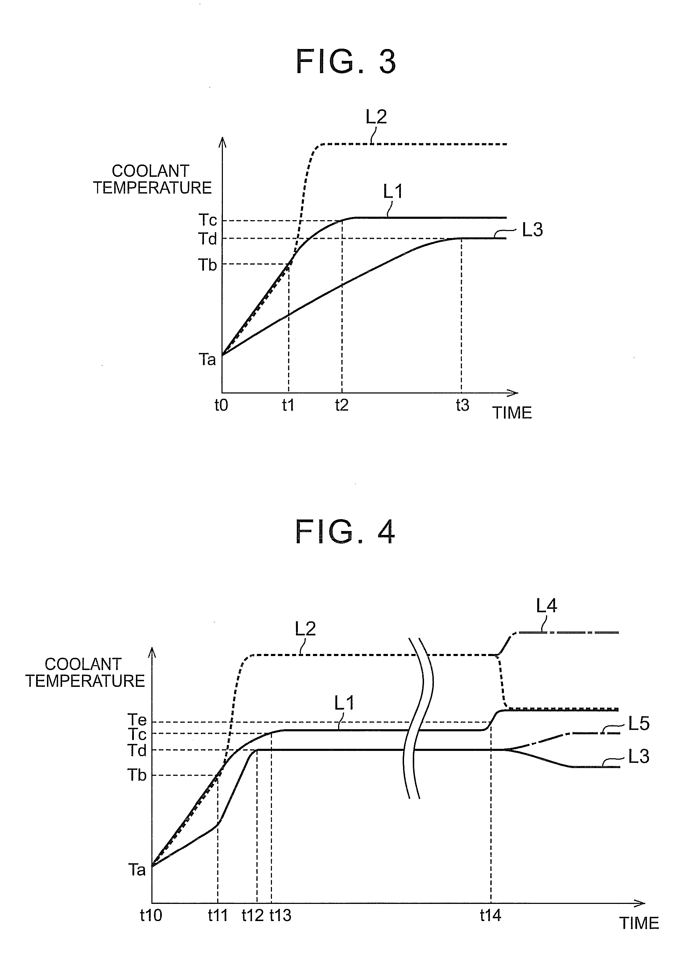

Next, an action of this embodiment will be described in comparison with a comparative example with reference to FIG. 3 and FIG. 4. Here, FIG. 3 shows the coolant temperature in each section of the coolant circuit 40 in the comparative example, and FIG. 4 shows the coolant temperature in the each section of the coolant circuit 40 in this embodiment. In FIG. 3 and FIG. 4, a solid line L1 indicates the exit coolant temperature as the temperature of the coolant that has flowed out of the water jacket exit 22. In addition, a broken line L2 indicates the temperature of the coolant that has flowed out of the EGR cooler 17. Furthermore, the temperatures of the coolants that have flowed out of the oil cooler 25 and the ATF warmer 35 are changed in substantially the same mode and are indicated by a solid line L3.

Differing from this embodiment, in the comparative example, the EGR cooler 17, the valve heat exchange section 15 of the EGR valve 14, the oil cooler 25, and the ATF warmer 35 are connected in parallel in the first heat exchange passage 50. In addition, in the comparative example, the EGR cut control that is shown in FIG. 2 and is executed at the time when the exit coolant temperature becomes equal to or higher than the predetermined temperature is not executed. Noted that, because the rest of the configuration in the comparative example is the same as that of this embodiment, a description thereof will not be made. First, a transition of the coolant temperature in the comparative example will be described with reference to FIG. 3.

As shown in FIG. 3, the temperature of the coolant in the each section of the coolant circuit 40 at time t0 is a temperature Ta indicative of cold time, and the internal combustion engine 10 starts being operated in this state. Then, when the operation of the internal combustion engine 10 is started, and the circulation of the coolant through the coolant circuit 40 is started, the temperature of the internal combustion engine 10 is gradually increased as indicated by the solid line L1. Thus, the exit coolant temperature is gradually increased. In addition, because the coolant that has flowed out of the water jacket exit 22 flows into the EGR cooler 17 and the valve heat exchange section 15 of the EGR valve 14, as indicated by the broken line L2, the temperature of the coolant that has flowed through the EGR cooler 17 is also increased in conjunction with an increase of the exit coolant temperature on the solid line L1. Then, when the exit coolant temperature exceeds a reference temperature Tb at time t1, the EGR valve 14 is opened, and thereby the exhaust gas flows through the EGR passage 13. In this way, as indicated by the broken line L2, because the coolant that flows through the EGR cooler 17 receives the heat of the exhaust gas, the temperature thereof is rapidly increased.

Then, when the exit coolant temperature becomes equal to or higher than a target temperature Tc that is based on the operation state of the internal combustion engine 10 at time t2, the control is executed such that the exit coolant temperature becomes the target temperature Tc by making the inflow port 47 and the second outflow port 49 in the control valve 46 communicate with each other and adjusting the communicated state therebetween (the passage cross section) by the valve body. Noted that FIG. 3 shows a case where the target temperature Tc is constant.

In addition, because the coolant that has flowed out of the water jacket exit 22 flows through the oil cooler 25 and the ATF warmer 35, as indicated by the solid line L3, the temperatures of the coolants that have flowed through the oil cooler 25 and the ATF warmer 35 are gradually increased from the temperature at the time t0. Then, the temperatures of the coolants that have flowed through the oil cooler 25 and the ATF warmer 35 become a temperature Td at time t3, and warming of the each section, to which the engine oil is supplied, by heating the engine oil in the oil cooler 25 and warming of the automatic transmission 30 through heating of the ATF in the ATF warmer 35 are completed.

Meanwhile, in this embodiment, the temperature of the coolant is changed as shown in FIG. 4. Noted that, in this example, the temperature of the coolant in the each section is the same temperature Ta as the temperature during the start in the comparative example in FIG. 3 when the start of the internal combustion engine 10 is initiated at time t10.

When the operation of the internal combustion engine 10 is started at the time t10, and the circulation of the coolant through the coolant circuit 40 is started, the exit coolant temperature indicated by the solid line L1 is gradually increased. In addition, because the coolant that has flowed out of the water jacket exit 22 flows into the EGR cooler 17 and the valve heat exchange section 15 of the EGR valve 14, as indicated by the broken line L2, the temperature of the coolant that has flowed through the EGR cooler 17 is also increased in conjunction with the increase of the exit coolant temperature. Then, when the exit coolant temperature exceeds the reference temperature Tb at time t11, the EGR valve 14 is opened, and thereby the exhaust gas flows through the EGR passage 13. In this way, as indicated by the broken line L2, the coolant that flows through the EGR cooler 17 receives the heat of the exhaust gas, and the temperature thereof is rapidly increased.

Then, as indicated by the solid line L3, the coolant that has flowed out of the water jacket exit 22 and flowed through the EGR cooler 17 and the valve heat exchange section 15 of the EGR valve 14 flows into the oil cooler 25 and the ATF warmer 35. Accordingly, the temperatures of the coolants that flowed through the oil cooler 25 and the ATF warmer 35 are gradually increased from the time t10. Because the temperature of the coolant that flows thereinto is rapidly increased at the time t11 onward, the temperatures of the coolants that flowed through the oil cooler 25 and the ATF warmer 35 are also rapidly increased. In this way, the temperatures of the coolants that flowed through the oil cooler 25 and the ATF warmer 35 become the temperature Td at time t12, warming of the each section, to which the engine oil is supplied, by heating of the engine oil in the oil cooler 25 and warming of the automatic transmission 30 through heating of the ATF in the ATF warmer 35 are completed. Then, a period required to complete this warming, that is, a period from the time t10 to the time t12 becomes a shorter period than a period required for warming by the oil cooler 25 and the ATF warmer 35, that is, a period from the time t0 to the time t3 in the comparative example shown in FIG. 3. Just as described, in this embodiment, the period required for warming by the oil cooler 25 and the ATF warmer 35 is reduced.

In addition, when the exit coolant temperature becomes equal to or higher than the target temperature Tc that is based on the operation state of the internal combustion engine 10 at time t13, the control is executed such that the exit coolant temperature becomes the target temperature Tc by making the inflow port 47 and the second outflow port 49 in the control valve 46 communicate with each other and adjusting the communicated state therebetween (the passage cross section) by the valve body. Noted that FIG. 4 shows a case where the target temperature Tc is constant.

In FIG. 4, when the exit coolant temperature becomes equal to or higher than a predetermined temperature Te at time t14, and the EGR cut permission condition is established, the EGR valve 14 is closed. Here, if the heat of the exhaust gas that is newly discharged from the internal combustion engine 10 is provided to the coolant at the predetermined temperature or higher that has flowed out of the water jacket exit 22 in the EGR cooler 17, as indicated by a one-dot chain line L4, the temperature of the coolant is further increased. Accordingly, the temperature of the coolant that flows into the oil cooler 25 and the ATF warmer 35 is increased, and thus the temperatures of the coolants that have flowed out of the oil cooler 25 and the ATF warmer 35 become the high temperature as indicated by a one-dot chain line L5. As a result, cooling by the coolants in the oil cooler 25 and the ATF warmer 35 is not appropriately performed. On the contrary to this, in this embodiment, the EGR valve 14 is brought into the completely closed state at the time t14, and a flow of the exhaust gas in the EGR passage 13 is stopped. Accordingly, as indicated by the broken line L2, even when the coolant flows through the EGR cooler 17, the heat from the exhaust gas that is newly discharged from the internal combustion engine 10 is not provided thereto, and thus the temperature of the coolant becomes the substantially same temperature as the exit coolant temperature. As a result, because the inflow of the high-temperature coolant to the oil cooler 25 and the ATF warmer 35 is inhibited, incapability of the coolant to appropriately cool the ATF and the engine oil can be inhibited.

According to the embodiment that has been described in detail so far, following effects can be realized. The heat exchange apparatus 1 of the vehicle of this embodiment includes the coolant circuit 40, to which the water pump 45, the EGR cooler 17, the oil cooler 25, and the ATF warmer 35 are connected, between the water jacket exit 22 and the water jacket entry 21. In the coolant circuit 40, the oil cooler 25 and the ATF warmer 35 are connected to the downstream side of the EGR cooler 17. In this way, the coolant that has flowed through the EGR cooler 17 flows through the oil cooler 25 and the ATF warmer 35. Thus, the heat that the coolant has received from the exhaust gas in the EGR cooler 17 can effectively be used for warming by the oil cooler 25 and warming by the ATF warmer 35 after warming of the EGR cooler 17 is completed. Therefore, the time required to complete warming by the oil cooler 25 and the ATF warmer 35 can be reduced.

In this embodiment, the EGR valve 14 for adjusting the recirculation amount of the exhaust gas is provided in the EGR passage 13, and the valve heat exchange section 15, in which the EGR valve 14 and the coolant exchange the heat, is connected in parallel with the EGR cooler 17 in the coolant circuit 40. In this way, during the cold start, the EGR valve 14 can be warmed by the coolant that has flowed out of the water jacket exit 22 and flows through the valve heat exchange section 15. Thus, generation of condensed water at a time when the exhaust gas passes through the EGR valve 14 can be inhibited. In addition, after warming of the EGR valve 14, the exhaust gas that passes through the EGR valve 14 can be cooled by the coolant.

In addition, because the heat capacity of the EGR valve 14 is small, warming thereof is promptly completed before completion of warming by the oil cooler 25 and the ATF warmer 35. In this way, the heat that the coolant has received from the exhaust gas in the EGR valve 14 can effectively be used for warming by the oil cooler 25 and warming by the ATF warmer 35. Therefore, the time required to complete warming by the oil cooler 25 and the ATF warmer 35 can further be reduced.

In the heat exchange apparatus 1 of the vehicle of this embodiment, when the exit coolant temperature indicated by the detection signal of the coolant temperature sensor 65 becomes equal to or higher than the predetermined temperature that is higher than the exit coolant temperature at the time when warming by the oil cooler 25 and the ATF warmer 35 is completed and the ATF and the engine oil are cooled by the coolant, the electronic control unit 60 controls to close the EGR valve 14.

In this way, when the temperature of the coolant that has flowed out of the water jacket exit 22 becomes equal to or higher than the predetermined temperature, the flow of the exhaust gas in the EGR passage 13 is stopped. Accordingly, the further increase of the coolant temperature, which is caused by the provision of the heat of the exhaust gas that is newly discharged from the internal combustion engine 10 to the coolant at the predetermined temperature or higher that has flowed out of the water jacket exit 22 in the EGR cooler 17, can be inhibited. Thus, the inflow of the high-temperature coolant to the oil cooler 25 and the ATF warmer 35 after the completion of warming by the oil cooler 25 and the ATF warmer 35 is inhibited. Therefore, the incapability of the coolant to appropriately cool the ATF and the engine oil can be inhibited.

In this embodiment, upon connection of the oil cooler 25 and the ATF warmer 35 to the downstream side of the EGR cooler 17, the oil cooler 25 and the ATF warmer 35 are connected in parallel. In this way, compared to a case where it is configured that the oil cooler 25 and the ATF warmer 35 are connected in series on the downstream side of the EGR cooler 17 in the first heat exchange passage 50, increase of pressure loss at a time when the coolant flows through the first heat exchange passage 50 can be inhibited. Therefore, a reduction of the flow rate of the coolant that flows through the first heat exchange passage 50 can be inhibited.

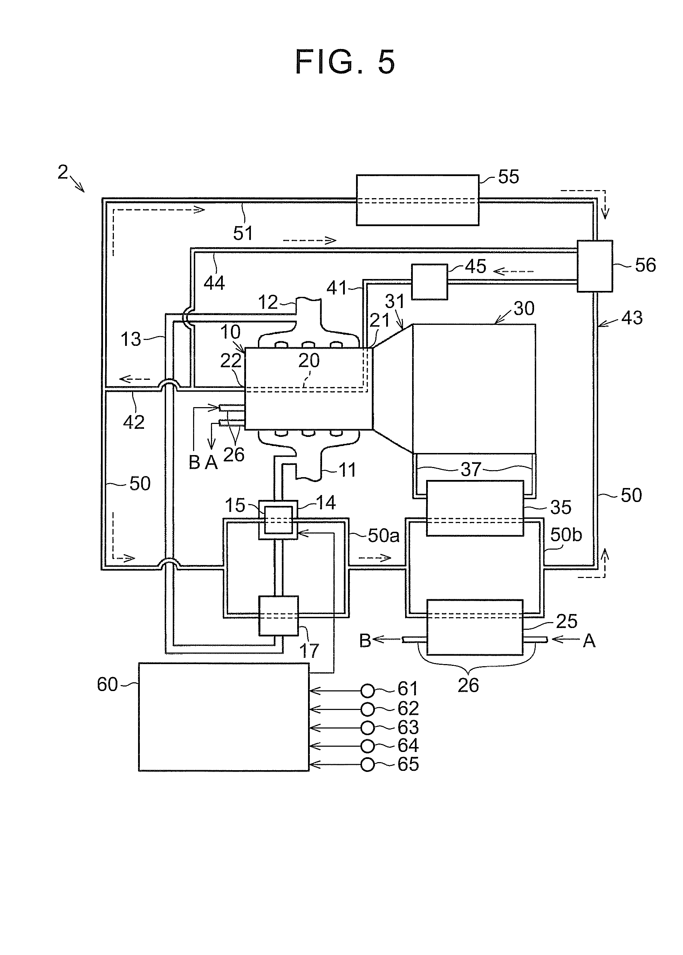

Next, a description will be made on a second embodiment of a heat exchange apparatus 2 of the vehicle with reference to FIG. 5. As shown in FIG. 5, differing from the coolant circuit 40 of the first embodiment, the control valve 46 is not provided in a coolant circuit 43 of the heat exchange apparatus 2 of the vehicle in the second embodiment, and the upstream end of the first heat exchange passage 50 and the upstream end of the second heat exchange passage 51 are connected to the exit-side passage 42 that is connected to the water jacket exit 22. In addition, the downstream end of the first heat exchange passage 50 and the downstream end of the second heat exchange passage 51 are connected to the upstream end of the entry-side passage 41 via a thermostat valve 56. Noted that the same configuration as the first embodiment is denoted by the same reference numerals as the first embodiment in FIG. 5, and the description thereof will appropriately be omitted.

The thermostat valve 56 is configured that the first heat exchange passage 50 and the entry-side passage 41 constantly communicate with each other through the thermostat valve 56. The thermostat valve 56 is connected to the exit-side passage 42, which is connected to the water jacket exit 22, by a bypass passage 44. In this way, some of the coolant that has flowed out of the water jacket 20 flows into the entry-side passage 41 after being supplied to a temperature sensing section of the thermostat valve 56 through the bypass passage 44. In addition, the thermostat valve 56 is configured to block communication between the second heat exchange passage 51 and the entry-side passage 41 in a state where the temperature of the coolant supplied thereto through the bypass passage 44, that is, the exit coolant temperature is lower than a setting temperature and to make the second heat exchange passage 51 and the entry-side passage 41 communicate with each other when the exit coolant temperature is equal to or higher than the setting temperature. Noted that this setting temperature is a temperature that is equal to or higher than a lower limit value of the exit coolant temperature in the case where the internal combustion engine 10 is warmed, and is a temperature that is lower than the above predetermined temperature for executing the EGR cut control.

With the configuration as described so far, the circulation of the coolant from the second heat exchange passage 51 to the entry-side passage 41 is prohibited by the thermostat valve 56 during the cold start of the internal combustion engine 10, and thus the circulation of the coolant in the second heat exchange passage 51 is stopped. Accordingly, while the coolant that has flowed out of the water jacket 20 of the internal combustion engine 10 flows into the first heat exchange passage 50, the coolant does not flow into the second heat exchange passage 51. Thus, the coolant that has flowed out of the water jacket 20 is branched in the first heat exchange passage 50, flows through the valve heat exchange section 15 and the EGR cooler 17, is then merged, is branched again, and flows through the oil cooler 25 and the ATF warmer 35. The coolants that have flowed out of the oil cooler 25 and the ATF warmer 35 are merged, are suctioned by the water pump 45, and flow into the water jacket 20 of the internal combustion engine 10.

Then, when the exit coolant temperature becomes the reference temperature, the coolant at this reference temperature or higher is branched and flows into the valve heat exchange section 15 and the EGR cooler 17. In this way, warming of the EGR valve 14 and the EGR cooler 17 with the small heat capacities is promptly completed when the coolant at this reference temperature or higher flows thereinto. Thereafter, when the exit coolant temperature becomes equal to or higher than the reference temperature, and the EGR valve 14 is thereby opened by the control of the electronic control unit 60, the exhaust gas flows through the EGR passage 13. In this way, the coolant receives the heat from the exhaust gas and reaches the high temperature when flowing through the EGR cooler 17. The coolant also receives the heat from the exhaust gas and reaches the high temperature when flowing through the valve heat exchange section 15. In this way, after being merged, this high-temperature coolant is branched and flows through the oil cooler 25 and the ATF warmer 35. Just as described, in the coolant circuit 43 of this embodiment, the oil cooler 25 and the ATF warmer 35 are connected to the downstream side of the EGR cooler 17 and the valve heat exchange section 15. Thus, the heat that the coolant has received from the exhaust gas in the EGR cooler 17 and the EGR valve 14 can effectively be used for warming by the oil cooler 25 and warming by the ATF warmer 35 after warming of the EGR cooler 17 and the EGR valve 14 is completed. Therefore, the time required to complete warming by the oil cooler 25 and the ATF warmer 35 is reduced. Then, the coolant that has flowed through the oil cooler 25 and the coolant that has flowed through the ATF warmer 35 are suctioned by the water pump 45 and flow into the water jacket 20 of the internal combustion engine 10.

Thereafter, when warming of the internal combustion engine 10 is completed, and the exit coolant temperature becomes equal to or higher than the setting temperature, the circulation of the coolant from the second heat exchange passage 51 to the water pump 45 through the thermostat valve 56 is permitted. In this way, some of the coolant that has flowed out of the water jacket exit 22 flows through the second heat exchange passage 51, and the heat of the coolant is radiated at a time when the coolant flows through the radiator 55. Meanwhile, the rest of the coolant that has flowed out of the water jacket exit 22 flows through the first heat exchange passage 50 in the above-described mode.

Noted that, also in this embodiment, in the case where the exit coolant temperature indicated by the detection signal of the coolant temperature sensor 65 becomes equal to or higher than the predetermined temperature and the EGR cut permission condition is established, the electronic control unit 60 controls the EGR valve 14 to be brought into the completely closed state.

Also in this embodiment, effects that are equivalent to the effects in the above first embodiment can be realized. Noted that each of the above embodiments may be modified as will be described below. In addition, in the following modified examples, examples that can be combined can appropriately be combined and applied to each of the above embodiments.

In each of the above embodiments, the EGR cooler 17, the valve heat exchange section 15 of the EGR valve 14, the oil cooler 25, the ATF warmer 35, and the radiator 55 are connected between the water jacket exit 22 and the water jacket entry 21. However, another heat exchanger may be connected between the water jacket exit 22 and the water jacket entry 21. The heat exchanger that is connected between the water jacket exit 22 and the water jacket entry 21 may be any of an exhaust cooling adapter, an exhaust heat recovery equipment, a heat exchanger of a water-cooling type heat insulator, a heat exchanger of a water-cooling type alternator, and the like, for example. In addition, such a heat exchanger may be connected to a middle point of a heat exchange passage that is connected to the first heat exchange passage 50 and the second heat exchange passage 51 in parallel, or may be connected to a middle point of the first heat exchange passage 50 or the second heat exchange passage 51. Noted that, in the case where the heat exchange passage that is connected to the first heat exchange passage 50 and the second heat exchange passage 51 in parallel is provided, a control valve for controlling a communicated state between the exit-side passage 42 and each of the heat exchange passages may be provided, or an electromagnetic valve may be provided separately for each of the heat exchange passages.

Furthermore, in the case where a diesel engine is mounted as the internal combustion engine 10 in the vehicle, the heat exchanger that is connected between the water jacket exit 22 and the water jacket entry 21 may be a heat exchanging section in which a supply pump and the coolant exchange the heat, a fuel cooler, or the like, in addition to the above-exemplified heat exchangers. In addition, such a heat exchanger may be connected to the middle point of the heat exchange passage that is connected to the first heat exchange passage 50 and the second heat exchange passage 51 in parallel, or may be connected to the middle point of the first heat exchange passage 50 or the second heat exchange passage 51. Noted that, in the case where the diesel engine is mounted as the internal combustion engine 10 and the exit coolant temperature is controlled to be the target temperature that corresponds to the engine operation state by using the control valve 46 of the first embodiment, this target temperature may be set in a mode that differs from the mode in the above first embodiment.

In each of the above embodiments, the valve heat exchange section 15, in which the EGR valve 14 and the coolant exchange the heat, is connected in parallel with the EGR cooler 17. However, the valve heat exchange section 15 may be connected to a portion that is on the downstream side of the EGR cooler 17 and on an upstream side of the oil cooler 25 and the ATF warmer 35, or may be connected to another portion in the coolant circuit 40, for example. In addition, the valve heat exchange section 15 may not be formed integrally with the EGR valve 14, but may simply be fixed to the EGR valve 14. Furthermore, the valve heat exchange section 15 may not be fixed to the EGR valve 14. In such a case, the valve heat exchange section 15 may not be connected to the coolant circuit.

In each of the above embodiments, when the exit coolant temperature indicated by the detection signal of the coolant temperature sensor 65 becomes equal to or higher than the predetermined temperature, and the EGR cut permission condition is established, the EGR valve is controlled to be closed. However, the EGR valve may always be closed when the exit coolant temperature indicated by the detection signal of the coolant temperature sensor 65 becomes equal to or higher than the predetermined temperature.

Moreover, the heat exchange apparatus of the vehicle may control the opening amount of the EGR valve 14 on the basis of a parameter other than the exit coolant temperature even when the exit coolant temperature indicated by the detection signal of the coolant temperature sensor 65 becomes equal to or higher than the predetermined temperature.

Each of the above embodiments is configured that the coolant flows through the second heat exchange passage 51 provided with the radiator 55 by the control valve 46, the thermostat valve 56, or the like when the exit coolant temperature becomes equal to or higher than a particular temperature. However, the flowing condition of the coolant, just as described, may be switched, for example, by directly connecting the first heat exchange passage 50 and the second heat exchange passage 51 to the exit-side passage 42 or providing an electromagnetic valve instead of the control valve 46 or the thermostat valve 56, at a middle point of the second heat exchange passage 51 and controlling this electromagnetic valve.

Timing at which the circulation of the coolant through the second heat exchange passage 51 is started is not limited to the mode exemplified in each of the above embodiments. Accordingly, a configuration that the coolant flows through the radiator 55 before completion of warming by the ATF warmer 35 and the oil cooler 25 may be adopted. Alternatively, a configuration that the control valve 46, the thermostat valve 56, the electromagnetic valve, or the like is not provided in the coolant circuit and that the coolant that has flowed out of the water jacket exit also constantly flows through the second heat exchange passage 51 may be adopted. Even in such a case, the oil cooler 25 and the ATF warmer 35 are connected to the downstream side of the EGR cooler 17. Therefore, the time required for warming by the oil cooler 25 and the ATF warmer 35 can be reduced by using the heat that the coolant has received from the exhaust gas in the EGR cooler 17 for warming by the oil cooler 25 and the ATF warmer 35.

In each of the above embodiments, the oil cooler 25 and the ATF warmer 35 are connected in parallel on the downstream side of the EGR cooler 17. However, the oil cooler 25 and the ATF warmer 35 may be connected in series on the downstream side of the EGR cooler 17. In a case of series connection, the ATF warmer 35 may be located upstream of the oil cooler 25, or the oil cooler 25 may be located upstream of the ATF warmer 35. That is, in the coolant circuit of the heat exchange apparatus of the vehicle, the oil cooler 25 and the ATF warmer 35 only need to be connected to the downstream side of the EGR cooler 17.

## Claims

1. A heat exchange apparatus (1) for a vehicle,
the vehicle including an internal combustion engine (10) and an automatic transmission (30), the internal combustion engine (10) having a water jacket (20), an intake passage (11), an exhaust passage (12), and an EGR passage (13),
the EGR passage (13) connecting the intake passage (11) and the exhaust passage (12), and the EGR passage (13) being configured to recirculate exhaust gas from the exhaust passage (12) to the intake passage (11),
the heat exchange apparatus (1) comprising:
an EGR cooler (17) configured to make the exhaust gas flowing through the EGR passage (13) and a coolant exchanging heat;
an oil cooler (25) configured to make engine oil and the coolant exchanging heat;
an ATF warmer (35) configured to make an automatic transmission fluid and the coolant exchanging heat, the automatic transmission fluid being a hydraulic fluid of the automatic transmission (30);
a water pump (45); and
a coolant circuit (40, 43) provided between an exit of the water jacket (20) of the internal combustion engine (10) and an entry of the water jacket (20), wherein
the coolant circuit (40, 43) is connected to the water pump (45), the EGR cooler (17), the oil cooler (25), and the ATF warmer (35), and
the oil cooler (25) and the ATF warmer (35) are connected to a downstream side of the EGR cooler (17) in the coolant circuit (40, 43).

2. The heat exchange apparatus (1) according to claim 1, wherein
the oil cooler (25) is connected in parallel with the ATF warmer (35) in the coolant circuit (40, 43).

3. The heat exchange apparatus (1) according to claim 1, further comprising
a valve heat exchange section (15) configured to exchange heat between an EGR valve (14) and the coolant, the EGR valve being disposed in the EGR passage, the EGR valve (14) being configured to adjust a recirculation amount of the exhaust gas,
the valve heat exchange section (15) being connected in parallel with the EGR cooler (17) in the coolant circuit (40, 43).

4. The heat exchange apparatus (1) according to claim 1 or 2, further comprising:
a detecting section (65) configured to detect a temperature of the coolant that has flowed out of the water jacket (20); and
an electronic control unit (60) configured to close an EGR valve (14) when the temperature of the coolant detected by the detecting section (65) becomes equal to or higher than a predetermined temperature, the EGR valve (14) being disposed in the EGR passage (13), the EGR valve (14) being configured to adjust a recirculation amount of the exhaust gas,
the predetermined temperature being higher than the temperature of the coolant detected by the detecting section (65) when warming by the ATF warmer (35) and the oil cooler (25) is completed and the automatic transmission fluid and the engine oil are cooled by the coolant.

5. The heat exchange apparatus (1) according to claim 3, further comprising:
a detecting section (65) configured to detect a temperature of the coolant that has flowed out of the water jacket (20); and
an electronic control unit (60) configured to close the EGR valve (14) when the temperature of the coolant detected by the detecting section (65) becomes equal to or higher than a predetermined temperature, wherein
the predetermined temperature being higher than the temperature of the coolant detected by the detecting section when warming by the ATF warmer (35) and the oil cooler (25) is completed and the automatic transmission fluid and the engine oil are cooled by the coolant.

6. A vehicle comprising a heat exchange apparatus (1) according to any one of claims 1 to 5.
